(19) Europäisches Patentamt
European Patent Office
Office européen des brevets

(11) EP 1 520 338 B1

(12) EUROPÄISCHE PATENTSCHRIFT

(45) Veröffentlichungstag und Bekanntmachung des Hinweises auf die Patenterteilung:
**26.09.2012 Patentblatt 2012/39**

(21) Anmeldenummer: **03732284.9**

(22) Anmeldetag: **22.04.2003**

(51) Int Cl.:
***H02N 2/00*** *(2006.01)* ***H01L 41/09*** *(2006.01)*

(86) Internationale Anmeldenummer:
**PCT/EP2003/004131**

(87) Internationale Veröffentlichungsnummer:
**WO 2003/090339 (30.10.2003 Gazette 2003/44)**

# (54) PIEZOMOTOR

PIEZO MOTOR

PIEZOMOTEUR

(84) Benannte Vertragsstaaten:
**AT BE BG CH CY CZ DE DK EE ES FI FR GB GR HU IE IT LI LU MC NL PT RO SE SI SK TR**

(30) Priorität: **22.04.2002 DE 10217963**
**19.06.2002 DE 10227509**

(43) Veröffentlichungstag der Anmeldung:
**06.04.2005 Patentblatt 2005/14**

(73) Patentinhaber: **Elliptec Resonant Actuator AG**
**44379 Dortmund (DE)**

(72) Erfinder:
- **MAGNUSSEN, Björn**
  **58638 Iserlohn (DE)**
- **HAGEMANN, Benjamin**
  **96317 Neuses/Kronach (DE)**
- **SCHULER, Dieter**
  **DE-70190 Stuttgart (DE)**
- **DAVIDSON, Erick**
  **96257 Redwitz (DE)**
- **WOLF, Kai**
  **D-65185 Wiesbaden (DE)**
- **VARADI, Peter**
  **El Cerrito, CA 94530 (US)**

(74) Vertreter: **Bittner, Bernhard et al**
**Hannke Bittner & Partner**
**Patent- und Rechtsanwälte**
**Ägidienplatz 7**
**93047 Regensburg (DE)**

(56) Entgegenhaltungen:
**EP-A- 1 154 496** **DE-A- 2 445 685**
**DE-A- 3 309 239** **GB-A- 2 364 965**
**US-A- 5 216 313** **US-A1- 2002 038 986**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 520 338 B1

## Beschreibung

Die Erfindung betrifft einen Piezomotor, bestehend aus mindestens einem mit einem Resonator verbundenen piezoelektrischen Bauelement und einem mit dem Resonator zusammenwirkenden bewegbaren Element.

Piezomotoren der eingangs genannten Art sind aus dem von der Anmelderin geschaffenen Stand der Technik bekannt. Hierbei werden piezoelektrische Bauelemente, die beim Anliegen einer geeigneten elektrischen Spannung mechanische Schwingungen ausführen an einen Resonator angekoppelt, welcher seinerseits wieder an einem bewegbaren Element anliegt. Der Resonator setzt die Schwingungen des piezoelektrischen Bauelements in vorzugsweise elliptische Schwingungen des Kontaktbereichs des Resonators, der das bewegbare Element berührt, um. Das bewegbare Element bewegt sich dabei vorzugsweise bei Anliegen einer ersten Spannung mit einer ersten Frequenz in eine erste Richtung, bei Anliegen einer zweiten Spannung mit einer zweiten Frequenz in eine zweite, vorzugsweise entgegengesetzte Richtung.

Durch diese Piezomotoren können bei besonders niedrigem Energieverbrauch und besonders kostengünstiger Herstellung der Piezomotoren elektrisch betriebene Stellelemente für das menschliche Ohr geräuschlos über äußerst exakt einzustellende Wegstrekken bewegt werden. Anwendung finden diese Piezomotoren dann, wenn eine kompakte Bauweise einen Motor mit geringem Platzbedarf erfordert, oder auch, wenn beim Betrieb keine oder nur geringe Magnetfelder entstehen dürfen.

Piezomotoren sind Massenprodukte, die beispielsweise in Kinderspielzeug eine Bewegung einzelner Elemente erzeugen oder aber die in Fahrzeugen eine Vielzahl von Bauteilen, so zum Beispiel den Aschenbecher oder die Außenspiegel, elektrisch ausfahren oder verstellen.

Das piezoelektrische Bauelement und der Resonator sind beispielhaft in der DE 100 62 672 A1 und der unveröffentlichten deutschen Patentanmeldung mit dem Aktenzeichen 101 41 820.5 beschrieben. Der Resonator ist mit dem piezoelektrischen Bauelement gekoppelt und überträgt dessen Schwingungen auf das bewegbare Element. Der Resonator schwingt dabei bevorzugt im Bereich seiner Eigenschwingungen. Eine beispielhafte Gestaltungsform des Piezomotors ist bereits in der WO 01/41228A1 oder in der Parallelanmeldung mit dem Aktenzeichen PCT/EP01/03245 beschrieben.

Bei den üblicherweise verwendeten Piezomotoren wurde das Erregersignal in einer solchen Frequenz an das piezoelektrische Bauelement übertragen, dass der Resonator zu Eigenschwingungen angeregt wird. Diese Resonanzfrequenzen erzeugen eine hohe Vibrationsamplitude und sind somit in der Regel als vorteilhafte Betriebsmoden mit vorteilhaften Leistungsmerkmalen des Piezomotors angesehen. Als Leistungsmerkmale werden hierbei die im Bereich der Kontaktfläche zwischen dem Resonator und dem bewegbaren Element auftretenden Kräfte sowie Geschwindigkeiten verstanden.

Bei der Serienfertigung von Piezomotoren kommt es darauf an, eine hohe Reproduzierbarkeit der von dem piezoelektrischen Bauelement auf den Resonator übertragenen Schwingungsmoden zu erzielen. Insbesondere sind die Schwingungsmoden im Bereich der Kontaktfläche zwischen dem Resonator und dem durch die übertragenen Schwingungen bewegbaren Element von entscheidender Bedeutung.

Die Art der Schwingungsmoden an der Kontaktfläche ist dabei wesentlich von der Geometrie des Resonators und der Lage und Einspannung des piezoelektrischen Bauelements innerhalb des Resonators abhängig. Dabei hat sich in der Praxis gezeigt, dass bei der Herstellung von Piezomotoren die Reproduzierbarkeit der gewünschten Betriebsmoden und Leistungsmerkmale des Piezomotors in vielen Fällen eine Nachbearbeitung der Piezomotoren erfordert.

Es ist daher eine Aufgabe der Erfindung, einen Piezomotor zur Verfügung zu stellen, der die Nachteile des Standes der Technik nicht aufweist und ein Verfahren anzugeben, welches die Herstellung von Piezomotoren und deren Anregung wesentlich vereinfacht.

Diese Aufgabe der Erfindung wird durch den Piezomotor mit den Merkmalen des Anspruchs 1 gelöst. Vorteilhafte Ausgestaltungen der Erfindung finden sich in den jeweiligen abhängigen Ansprüchen.

Gelöst wird die Aufgabe demnach mit einem Piezomotor mit mindestens einem Piezoelement, das mit einem Resonator verbundenen ist und diesen in Schwingungen versetzt und gegebenenfalls einem elastischen Element zum Andruck des Resonators an ein anzutreibendes Element, wobei der Resonator eine Symmetrieebene aufweist und der Resonator bei mindestens zwei Betriebsfrequenzen ($f_1$, $f_2$) betreibbar ist und das Piezoelement und/oder das elastische Element so an dem Resonator angeordnet sind, dass die Symmetrieebene keine Symmetrieebene des Piezomotors darstellt , so dass mit dem Resonator das bewegbare Element bei den beiden Betriebsfrequenzen ($f_1$, $f_2$) in zwei entgegengesetzte Richtungen antreibbar ist, und das Piezoelement aus einer zu dieser Symmetrieschene parallelen Hauptfläche des Resonators heransragt, damit das Piezoelement extentrisch zu minolestens einer Symmetrieebene des Resonatens angeordnet ist.

Vorzugsweise übersteigt die obere Betriebsfrequenz die untere um nicht mehr als das 1,5-fache.

Vorzugsweise liegen die Betriebsfrequenzen unterhalb der Hälfte des Frequenzwertes, der sich aus der Wellenausbreitungsgeschwindigkeit für Longitudinalwellen des Resonatormaterials geteilt durch die grösste Resonatorabmessung ergibt.

Vorzugsweise weist der Resonator zwei im wesentlichen parallel zueinander angeordnete, gleichförmige sowie gleich große Hauptflächen aufweist. So wird eine Zweidimensionalität des Resonators erzielt, bei der sich die Geometrie in einer Richtung, welche im wesentlichen senkrecht auf der durch die Hauptflächen aufgespannten Ebene verläuft, nicht verändert.

Der Fachmann versteht, dass das Prinzip der Zweidimensionalität auch dann verwirklicht ist, wenn Übergangsbereiche, beispielsweise Kanten oder Ecken, durch Fertigung, Nachbearbeitung oder Verschleiß abgeschrägt oder abgerundet sind und somit eine unwesentliche Veränderung der Geometrie in Dickenrichtung festgestellt werden kann.

Als Hauptflächen des Resonators werden dabei diejenigen Flächen beschrieben, die parallel zu den von den Hauptachsen des Resonators, also seiner Längen- und seiner Breitenachse aufgespannten Ebenen liegen.

Durch die vergleichsweise einfache im wesentlichen zweidimensionale geometrische Gestaltung des Resonators ist es möglich, die konstruktiven Rahmenbedingungen so zu gestalten, dass die Betriebseigenschaften des Piezomotors mit einer ausreichenden Genauigkeit vorherbestimmt werden können. Hierdurch ist es möglich, auf eine Nachbearbeitung der Piezomotoren zu verzichten und die Ausschussquote auf ein Minimum zu reduzieren. Zudem ist es möglich, einen Motorantrieb mit kleinen Vibrationsamplituden zu erzeugen, der vorzugsweise auch außerhalb seiner Resonanzfrequenzen betrieben werden kann. Hierdurch wird eine aufwendige Nachbearbeitung der Piezomotoren hinfällig. Zudem kann eine breitbandigere Erregung mit geringeren Anforderungen an die Genauigkeit der Antriebselektronik erfolgen. Es war deshalb für den Fachmann überaus erstaunlich, dass bei Verwirklichung einer zweidimensionalen Resonatorgeometrie ein Piezomotor erzeugt werden kann, bei dem auf eine besonders aufwendige Ansteuerungselektronik verzichtet werden kann.

Hierdurch ergibt sich bei der Konstruktion des Piezomotors zudem die Möglichkeit, die an sich bekannte kraftabhängige Verschiebung der Resonanzfrequenzen des Resonators bei Kontakt zu dem bewegbaren Element unberücksichtigt zu lassen. Vorzugsweise sind die Schwingungen des Piezomotors schließlich nahezu unabhängig von dem Kontakt des Resonators mit dem bewegbaren Element.

In einer bevorzugten Ausgestaltung der Erfindung bleibt der Querschnitt des Resonators in einer Richtung, die senkrecht auf den Hauptflächen steht, konstant. Hierdurch wird eine besonders einfache Form der Zweidimensionalität erzeugt, bei der das Schwingungsverhalten des Piezomotors, beispielsweise besonders einfach durch Veränderung der Dicke des Resonators verändert werden kann. Dadurch wird der Parameterraum derart eingeschränkt, dass eine mathematische Modellierung und Vorhersage über die Schwingungseigenschaften des Piezomotors deutlich erleichtert wird.

Das piezoelektrische Bauelement ist in einer bevorzugten Ausgestaltung der Erfindung in monolithischer Bauweise hergestellt. In einer besonders bevorzugten Ausgestaltung der Erfindung sind in diese monolithische Piezokeramik Elektroden aus Kupfer eingebracht, die kammartig ineinander greifen. Derartige piezoelektrische Bauelemente sind in der Deutschen Patentanmeldung mit dem Aktenzeichen 101 46 704.4 beschrieben. Diese Patentanmeldung wird hiermit ebenfalls als Referenz eingeführt und gilt somit als Teil der Offenbarung. Vorzugsweise ist die Keramik einstückig ausgeführt

Das bewegbare Element kann jede Form aufweisen und beliebig bewegbar sein. Beispielsweise kann ein stabförmiges Element entlang seiner Längsachse vor- und zurückbewegt werden. Ebenso kann ein kreisförmiges bewegbares Element um eine Drehachse im Uhrzeigersinn und diesem entgegen gedreht werden. Bezüglich des Materials des bewegbaren Elements besteht ebenfalls keine Beschränkung. Jedoch ist bei den langfristig an der Kontaktfläche zwischen dem Resonator und dem bewegbaren Element auftretenden Reibungskräften ein Material von Vorteil, dass eine besonders dauerhafte Beständigkeit gegen Abrieb aufweist. In einer vorteilhaften Ausgestaltung der Erfindung besteht das bewegbare Element daher aus einem zumindest teilweise faserverstärkten Kunststoff, vorzugsweise Glaskugel-, Mineralfaser-, Kohlefaser- und/oder Glasfaser-verstärktem Kunststoff. Besonders vorteilhaft ist Kohlefaser wegen der Kombination hoher Steifigkeit und Leitfähigkeit, die zur Positionsbestimmung genutzt werden kann. Hierdurch wird in besonders vorteilhafter Weise eine Vorrichtung geschaffen, die aufgrund ihrer geringen Masse eine ebenso geringe Trägheit aufweist.

Das Schwingungsverhalten des Piezomotors ist sowohl von der Geometrie des Resonators und der Form und Lage des eingespannten piezoelektrischen Bauelements als auch von der Art und Weise seiner Aufhängung abhängig. Vorteilhafterweise wird die Gestalt des Resonators dabei so gewählt, dass die mechanische Impedanz, die einen frequenzabhängigen Zusammenhang zwischen der Geschwindigkeit der Kontaktstelle zum bewegbaren Element und der dort angreifenden Kraft darstellt, hinreichend groß ist. Die an dem bewegbaren Element angreifende Kraft ist besonders bevorzugt so groß, dass sie keinen wesentlichen Einfluss auf die Vibrationen des Resonators ausübt. Die Schwingungen des erfindungsgemäßen Resonators sind in diesem besonders bevorzugten Fall weitgehend von den Einflüssen des Kontaktes mit dem bewegbaren Element entkoppelt, also unabhängig von dem verwendeten bewegbaren Element oder der Lastsituation des Piezomotors.

Ebenso kann das Schwingungsverhalten des Resonators durch die Einspannung des piezoelektrischen Bauelements in dem Resonator und die relative Lage des piezoelektrischen Bauelements und/oder der Einspannung zum Resonator verändert werden. In einer bevorzugten Ausgestaltung der Erfindung kann die Einspannung des piezoelektrischen Bauelements in dem Resonator derart erfolgen, dass das piezoelektrische Bauelement exzentrisch zu mindestens einer Symmetrieebene oder des Resonators angeordnet ist. Hierdurch wird die Symmetrie des Resonators so gezielt gestört, dass Betriebsmoden entstehen, die weder als reine Longitudinalmoden noch als Torsionsmoden oder Biegemoden zu kategorisieren sind. Derartige nicht reinen Betriebsmoden treten auch bei kleinen Piezomotoren bei niedrigen Betriebsfrequenzen auf. Es ergibt sich somit in bevorzugter Weise die Möglichkeit, auch bei kleinen Piezomotoren und/oder niedrigen Betriebsfrequenzen die auftretenden Schwingungen als Betriebsmoden zu nutzen, wodurch bei zwei Frequenzen unterschiedliche, vorzugsweise entgegengesetzte, Vortriebsrichtungen des bewegbaren Elements erzeugt werden können. Die Verwendung der nicht reinen Schwingungsmoden erlaubt, daß die Frequenzen vorteilhaft nahe zueinander plaziert werden können, was mit reinen Schwingungsmoden nicht für mehrere Richtungen geht und Vorteile für die Ansteuerung hat. Die Symmetrie des erfindungsgemäßen Piezomotors kann auch oder zusätzlich durch ein zur Symmetrieebene des Resonators asymmetrisch angeordnetes elastisches Element gezielt gestört werden.

Diese nicht reinen Betriebsmoden können ebenfalls über eine gezielte Störung der Symmetrie des Resonators erzeugt werden. Oftmals besitzt der Resonator eines Piezomotors daher keine Symmetrieebene oder Symmetrieachse. In einer bevorzugten Ausgestaltung der Erfindung weist der Resonator eine Öffnung zur Aufnahme des piezoelektrischen Bauelements auf. Die Symmetrie des Resonators wird hierbei durch die Lage dieser Öffnung gestört, wobei vorzugsweise die die Öffnung begrenzenden Seitenwände zumindest über eine Teillänge unterschiedliche Querschnitte aufweisen. Dies wird in einer überaus bevorzugten Ausgestaltung der Erfindung dadurch erreicht, dass die Öffnung seitlich von der Längsachse versetzt in dem Resonator angeordnet wird.

In einer weiteren besonders bevorzugten Ausgestaltung der Erfindung wird die Symmetrie des Resonators dadurch gestört, dass zumindest eine der die Öffnung begrenzenden Seitenwände keinen in Längsrichtung konstanten Querschnitt aufweist.

Ebenso kann in einer weiteren besonders bevorzugten Ausgestaltung des erfindungsgemäßen Piezomotors wenigstens eine der Seitenwände in Längsrichtung ungerade, insbesondere gekrümmt oder wellenförmig verlaufen. Darüber hinaus wird in weiteren besonders bevorzugten Ausgestaltungen die Symmetrie des Resonators durch Anbringen einer oder mehrerer Zusatzmassen oder aber Zusatzversteifungen oder Schwächungen gestört. Auch durch diese besonders einfachen konstruktiven Maßnahmen wird das Schwingungsverhalten des Resonators derart verändert, dass vorteilhafte und nicht als reine Longitudinal-, Torsions- oder Biegemoden zu klassifizierende Betriebsmoden auftreten.

Die Symmetrie des Resonators kann ebenfalls über die Art und Lage der Einspannung des piezoelektrischen Bauelements in dem Resonator gestört werden. In einer bevorzugten Ausgestaltung der Erfindung erfolgt diese Einspannung des piezoelektrischen Bauelements nicht über die gesamte Breite der Öffnung sondern über vergleichsweise kleine Kontaktflächen zu dem Resonator. Vorzugsweise sind diese Kontaktflächen asymmetrisch zur Symmetrieebene des Resonators angeordnet, wobei das piezoelektrische Bauelement symmetrisch zur Symmetrieebene des Resonator angeordnet sein kann. Hierdurch wird in besonders einfacher Weise eine bezogen auf die Symmetrieebene des Resonators asymmetrische Lagerung des piezoelektrischen Bauelements verwirklicht, bei der die Variation der Einspannung über eine Verschiebung der aus dem Resonator und/oder dem piezoelektrischen Bauelement hervorstehenden Kontaktflächen erfolgt.

In einer bevorzugten Ausgestaltung der Erfindung besitzt der Piezomotor ein einziges piezoelektrisches Bauelement. In einer besonders bevorzugten Ausgestaltung der Erfindung weist dieses piezoelektrische Bauelement zwei Terminals auf, über die eine oder mehrere elektrische Erregerfrequenzen auf das piezoelektrische Bauelement übertragen werden. Ein Terminal im Sinne der Erfindung ist ein zusammenhängender, elektrisch leitender Bereich auf oder innerhalb der Keramik verstanden, auf dem das elektrische Potential von außen vorgegeben wird.

In einer ganz besonders bevorzugten Ausgestaltung der Erfindung werden die piezoelektrischen Bauelemente oder das piezoelektrische Bauelement mit genau einem Signal angeregt. In einer überaus bevorzugten Ausgestaltung der Erfindung erzeugt der Motor bereits bei Ansteuerung mit einem Sinus- oder Rechtecksignal eine makroskopische Bewegung. Hierdurch wird in bevorzugter Weise ein besonders einfacher Aufbau eines erfindungsgemäßen Piezomotors verwirklicht, bei dem auch die Antriebselektronik besonders einfach gestaltet ist und bei dem trotzdem eine makroskopische Bewegung des anzutreibenden Elementes erzielt wird. Auf die aufwendige Erzeugung der üblichen im wesentlichen sägezahnförmig verlaufenden Erregersignale kann verzichtet werden.

Erfindungsgemäß ist das anzutreibende Element bei zwei unterschiedlichen Betriebsfrequenzen in zwei unterschiedliche Richtungen antreibbar. In einer besonders bevorzugten Ausgestaltung der Erfindung schwingt dabei die Kontaktfläche in zwei unterschiedliche Richtungen. Hierdurch wird eine Vorrichtung erhalten, die vorzugsweise ohne die Notwendigkeit einer Führung des anzutreibenden Elements ein Vor- und Zurückbewegen des bewegbaren Elements durch Veränderung der Betriebsfrequenz ermöglicht.

Dabei ist es eine vorteilhafte Ausgestaltung der Erfindung, wenn der Resonator an der Kontaktstelle zu dem bewegbaren Element für beide Betriebsfrequenzen Schwingungen mit Amplituden ausführt, die in der gleichen Größenordnung liegen. So wird gewährleistet, dass ohne zusätzlichen Ansteuerungsaufwand eine Vor- und Rückbewegung des bewegbaren Elements mit gleich großen Leistungsmerkmalen wie Kraft oder Geschwindigkeit erfolgt.

In einer besonders vorteilhaften Ausgestaltung der Erfindung weisen diese Schwingungen Amplituden von 50 nm - 50 μm, vorzugsweise 500 nm - 20 μm auf. In einer überaus bevorzugten Ausgestaltung der Erfindung beträgt die Amplitude der Schwingungen 1 μm - 5 μm. Hierdurch wird eine besonders vorteilhafte Ausnutzung der von dem Resonator ausgeführten Schwingungen ermöglicht.

In einer vorteilhaften Ausgestaltung des erfindungsgemäßen Piezomotors weisen die Antriebsmoden des Piezomotors im Kontaktbereich zu dem bewegbaren Element für unterschiedliche Bewegungsrichtungen des bewegbaren Elements nicht zueinander parallel verlaufende Geschwindigkeitsprofile auf. Hierdurch ist gewährleistet, dass die Betriebsmoden in einem oder mehreren Punkten der Kontaktfläche unterschiedliche Ausrichtungen aufweisen. Die Ausrichtung der Betriebsmoden ist hierbei die räumliche Vorzugsrichtung der Bewegung eines Materiepunktes, beispielsweise die Halbachse einer elliptischen Bewegung oder die Tangente an die Trajektorie bei Eintreten des Kontakts zwischen Resonator und bewegbarem Element.

In einer besonders vorteilhaften Ausgestaltung der Erfindung spannen die Ausrichtungen der Betriebsmoden einen Winkel von mehr als 30° und weniger als 150°, vorzugsweise 70° bis 110° auf.

In einer weiteren vorteilhaften Ausgestaltung der Erfindung wird das bewegbare Element bei zwei verschiedenen Frequenzen, vorzugsweise zwei Resonanzfrequenzen, in zwei entgegengesetzte Richtungen angetrieben. In diesem Fall ist es vorteilhaft, wenn die Phase von Strom und Spannung innerhalb der zu den Resonanzfrequenzen korrespondierenden Resonanz-Antiresonanz-Paare abfällt.

Bei den beschriebenen Resonanz-Antiresonanz-Paaren wird beobachtet, dass das Amplitudenverhältnis von Strom und Spannung bei dem kapazitive Eigenschaften aufweisenden piezoelektrischen Bauelement im wesentlichen mit der Frequenz linear zunimmt. Zudem besteht aufgrund der kapazitiven Eigenschaften eine Phasenverschiebung von Strom und Spannung von 90°. In der Nähe einer für den Betrieb geeigneten Erregerfrequenz steigt der Strom als Funktion der Frequenz überproportional an, fällt dann auf Null ab und kehrt schließlich zum kapazitiven Verhalten zurück.

In einer besonders vorteilhaften Ausgestaltung der Erfindung fällt die Phase innerhalb der Resonanz-Antiresonanz-Paare um mindestens 30°, vorzugsweise um mehr als 45°, insbesondere um mehr als 60° ab. Darüber hinaus liegt der Phasenabfall in einer überaus bevorzugten Ausgestaltung der Erfindung für beide Resonanz-Antiresonanz-Paare in der gleichen Größenordnung.

Der Resonator wird vorzugsweise über ein elastisches Element, insbesondere eine Feder, an das bewegbare Element gedrückt, wobei vorzugsweise gewährleistet ist, dass die Resonanzen des elastischen Elements, bei denen ein Großteil der kinetischen Energie des Piezomotors von dem elastischen Element aufgenommen wird, außerhalb der Betriebsfrequenzen für den Piezomotor liegt. Hierdurch wird erreicht, dass keine sogenannte dynamische Tilgung, also das Entgegenwirken der Resonanzfrequenzen des elastischen Elements und des Resonators auftritt. Unerwünschte Resonanzen der Aufhängung werden so aus den Betriebsfrequenzbereichen ausgegrenzt.

In einer weiteren vorteilhaften Ausgestaltung der Erfindung ist der größte Anteil der bei Betrieb des Piezomotors erzeugten Formänderungsenergie bei allen Betriebsfrequenzen im Resonator gespeichert. In diesem Fall wirkt der Resonator effektiv als Energiespeicher des Piezomotors. Vorzugsweise beträgt der im Resonator gespeicherte Energieanteil mindestens 60%, besonders bevorzugt mindestens 90% der bei Betrieb des Piezomotors erzeugten mechanischen Energie.

In einer bevorzugten Ausgestaltung der Erfindung ist ein Anteil von wenigstens 30%, bevorzugt wenigstens 60%, insbesondere wenigstens 90% der Gesamtenergie in denjenigen Teilen des erfindungsgemäßen Piezomotors gespeichert, welche leicht in Serie hergestellt werden können. Dies sind vor allem der Resonator und die Feder. Insbesondere wenn die Feder zur Aufhängung des Piezomotors zusätzlich mit einem Rahmen oder dergleichen verbunden ist, ist eine besonders gute Energiespeicherung vor allem dann gegeben, wenn auch der Übergang von der Feder zu dem Rahmen gut reproduzierbar gestaltet ist. Durch die Speicherung des Großteils der Energie in Resonator, Feder und gegebenenfalls Rahmen kann auf eine besonders präzise Fertigung des piezoelektrischen Bauelements ohne nachteilige Auswirkungen auf die Reproduzierbarkeit des Piezomotors verzichtet werden.

Vorzugsweise ist die Feder, über die der Piezomotor mit der Aufhängung verbunden ist, eine Schenkelfeder. In einer besonders bevorzugten Ausgestaltung der Erfindung liegen die Windungen dieser Schenkelfeder nicht aneinander an, so dass die Feder auch bei großen von dem Resonator auf die Feder übertragenen Schwingungsamplituden nur wenig Energie dissipiert. Vorzugsweise wird dies zudem dadurch unterstützt, dass die Steigung der Federwindungen den Durchmesser des Federdrahts um einen Betrag übersteigt, der größer als die auftretenden Schwingungsamplituden ist. Ebenso kann die Feder vorzugsweise statisch so vorbelastet sein, dass sich die Federwindungen unter der Belastung aufweiten.

Vorzugsweise kann der Draht der Feder auch zumindest über eine Teillänge einen unrunden Querschnitt aufweisen. Hierdurch wird mit besonders einfachen Mitteln eine zusätzliche Verdrehsicherung gewährleistet.

In einer weiteren vorteilhaften Ausgestaltung der Erfindung sind die mechanischen Impedanzen oder Admittanzen des Piezomotors, insbesondere an der Kontaktstelle des Resonators mit dem bewegbaren Element so groß, dass die von dem Resonator ausgeführten Schwingungen unabhängig von der Größe, Form, Ausrichtung und Bewegung des anzutreibenden Elements sind.

In einer anderen vorteilhaften Ausgestaltung des erfindungsgemäßen Piezomotors wird das antreibbare Element bei zwei verschiedenen Betriebsfrequenzen ($f_1$, $f_2$), vorzugsweise Resonanzfrequenzen, in zwei entgegengesetzte Richtungen angetrieben, wobei die Betriebsfrequenzen innerhalb zweier Frequenzintervalle ($\Delta f_1$, $\Delta f_2$) liegen, die sowohl einen Mindestabstand ($\Delta f$) zueinander aufweisen als auch innerhalb einer maximalen Intervallbreite ($\Delta f_{max}$) liegen, die ihrerseits innerhalb des Einflussbereichs der elektrischen Resonanz eines Schwingkreises liegt, den das piezoelektrische Bauelement mit einer Spule in der Ansteuerungselektronik bildet.

Hierdurch wird in vorteilhafter Weise gewährleistet, dass auch bei fertigungstechnischen Toleranzen und den daraus resultierenden Schwankungen der Betriebsfrequenz sicher gestellt ist, dass für jede gewünschte Betriebsfrequenz ein Intervall ($\Delta f$) definiert ist, in dem alle erfindungsgemäßen Piezomotoren einer Serie genau eine ihrer Betriebsfrequenzen, beispielsweise allein die Betriebsfrequenz für den Vorwärtsantrieb des bewegbaren Elements aufweisen. Darüber hinaus wird auch bei der Verwendung einer adaptiven Ansteuerungselektronik, welche ein breitbandiges Ansteuerungssignal erzeugt, gewährleistet, dass innerhalb eines vorgegebenen maximalen Frequenzintervalls ($\Delta f_{max}$) nur eine für den Antrieb des antreibbaren Elements nutzbare Betriebsfrequenz vorliegt. Die Gefahr, eine falsche Resonanz oder mehrere entgegengesetzte wirkende Resonanzen mit dem gleichen Signal anzuregen, ist somit sicher unterbunden.

Vorzugsweise ist der Mindestabstand der Betriebsfrequenz-Intervalle aber auch so klein, dass der kapazitive Blindanteil des Piezomotors durch die Induktivität einer einzigen Spule der Ansteuerungselektronik kompensiert werden kann. Das maximale Frequenzintervall ($\Delta f_{max}$) für beide Betriebsfrequenzen ist dabei vorzugsweise so groß, dass die Intervalle beider Betriebsfrequenzen ($\Delta f_1$, $\Delta f_2$) innerhalb des Resonanzeinflusses eines einzigen elektrischen Schwingkreises liegen, der von der induktiv wirkenden Spule der Ansteuerungselektronik und dem kapazitiv wirkenden Piezomotor gebildet ist. Hierdurch ist es möglich, die Ansteuerungselektronik mit besonders einfachen Mitteln herzustellen.

In einer besonders bevorzugten Ausgestaltung der Erfindung erzeugt die Ansteuerungselektronik zusammen mit dem Piezomotor einen Schwingkreis mit der Frequenz $f_e$, der im Frequenzintervall zwischen $f_e$, und $f_{eh}$ als Bandsperre wirkt. In einer ganz besonders bevorzugten Ausgestaltung der Erfindung ist die Ansteuerung des Motors besonders günstig, wenn für die einzelnen Größen folgende Abhängigkeiten gelten:

$$f_{el} > 2/3\ f_e \quad \text{und} \quad f_{eh} < 2\ f_e.$$

Ganz besonders bevorzugt sind die Abhängigkeiten jedoch bei:

$$f_{el} > 4/5\ f_e \quad \text{und} \quad f_{eh} < 4/3\ f_e.$$

In einer überaus bevorzugten Ausgestaltung der Erfindung betragen die Abhängigkeiten:

$$f_{el} > 6/7\ f_e \quad \text{und} \quad f_{eh} < 6/5\ f_e.$$

Hierdurch ist eine Ansteuerung des Piezomotors besonders gut einstellbar, wobei zudem der Stromverbrauch besonders niedrig ist.

In einer vorteilhaften Ausgestaltung der Erfindung bestehen für den Mindestabstand der Betriebsfrequenz-Intervalle $\Delta f$ und eine Betriebsfrequenz $f_1$ folgende Abhängigkeiten:

$$0{,}025 \cdot f_1 \leq \Delta f \leq 1 \cdot f_1$$

und bevorzugt

$$0{,}1 \cdot f_1 \leq \Delta f \leq 0{,}3 \cdot f_1.$$

In einer bevorzugten Ausgestaltung der Erfindung beträgt die elektromechanische Kopplung des piezokeramischen Bauelements an die Schwingungen des Resonators für die jeweiligen Betriebsmoden, d.h. der Abstand zwischen einer Resonanzfrequenz $f_1$ bzw. $f_2$ und der im Frequenzband darauffolgenden Antiresonanzfrequenz $f_1$' bzw. $f_2$' mindestens 500 Hz, vorzugsweise mehr als 2 kHz, besonders bevorzugt mehr als 5 kHz.

In einer weiteren bevorzugten Ausgestaltung der Erfindung ist die Stromaufnahme des Piezomotors innerhalb der besagten Frequenzintervalle ($\Delta f_1$, $vf_2$) nur bei den Betriebsfrequenzen maximal. Dies gewährleistet einen optimalen Wirkungsgrad des Piezomotors bei der Erregung mit Signalen, welche innerhalb des angegebenen Frequenzintervalls liegen.

In einer besonders bevorzugten Ausgestaltung der Erfindung liegt der Abstand zwischen den verschiedenen Frequenzpaaren ($f_1$, $f_1$') und ($f_2$, $f_2$') in der gleichen Größenordnung. In einer weiteren bevorzugten Ausgestaltung des erfindungsgemäßen Piezomotors weist der Resonator im Bereich eines ganzzahligen Vielfachen der Frequenzen ($f_1$, $f_2$) keine Resonanzen oder aber Resonanzen mit nur geringer Ankopplung und/oder Amplitude auf. Somit ist gewährleistet, dass keine oder nur geringe schädliche Einflüsse durch die Obertöne einer nicht harmonischen elektrischen Anregung des Piezomotors auftreten.

Vorzugsweise beträgt das Verhältnis des Abstandes von f1 zu f1' zum Abstand f2 zu f2' zwischen 0,25 und 4.

In einer weiteren bevorzugten Ausgestaltung des erfindungsgemäßen Piezomotors beträgt der elektromechanische Kopplungsfaktor (EMCF) der einzelnen Resonanzfrequenzen, insbesondere der Betriebsmoden des Piezomotors mindestens 0,01, vorzugsweise 0,04, insbesondere mehr als 0,1. Darüber hinaus ist es vorteilhaft, wenn der Kopplungsfaktor für beide Betriebsmoden in der gleichen Größenordnung liegt.

Ein weiterer Aspekt ist ein Verfahren zur Herstellung von Resonatoren eines erfindungsgemäßen Piezomotors. Die vorzugsweise im wesentlichen zweidimensionalen Resonatoren werden hierbei beispielsweise durch Ablängen eines Profilstabes, derer beispielsweise beim Strangpressen erzeugt wird, hergestellt.

Der Herstellungsprozess für die Piezomotoren wird durch die Verwendung der Resonatoren, deren Gestalt im wesentlichen nur in zwei Dimensionen variabel ist, deutlich vereinfacht. Verfahren bietet ein hohes Maß an Reproduzierbarkeit der gewünschten Schwingungsmoden sowie eine besonders geringe Ausschussquote in der Produktion.

In einer vorteilhaften Ausgestaltung des Verfahrens erfolgt das Ablängen eines vorzugsweise stranggepressten Profilstabes senkrecht zur Längsachse des Strangs. In einer besonders bevorzugten Ausgestaltung des Verfahrens erfolgt das Ablängen jedoch um einen Winkel $\alpha < 90°$ von der Längsachse des Strangs geneigt. So können auf besonders einfache Weise Resonatoren mit einer Asymmetrie, bezogen auf die Symmetrieebene , erzeugt werden, deren Hauptflächen nicht lotrecht übereinander liegen und bei denen keine rechtwinkligen Übergänge von den Haupt- zu den Seitenflächen verwirklicht sind.

Ebenso kann die Herstellung der Resonatoren durch Herausschneiden, vorzugsweise Ausstanzen aus einem Blech mit konstanter Dicke erfolgen. Vorzugsweise erfolgt das Herausschneiden, insbesondere Ausstanzen aber unter einem Winkel ungleich 90°. Hierdurch kann in besonders einfacher Weise ein Resonator auch in großen Stückzahlen hergestellt werden, bei dem die Hauptflächen genau parallel zueinander stehen und vorzugsweise jedoch die Übergänge von den Hauptflächen zu den Seitenflächen nicht rechtwinklig ausgestaltet sind. Hierdurch wird in besonders einfacher Weise die Herstellung von Resonatoren, bei denen nichtrechtwinklige Übergänge von den Haupt- zu den Seitenflächen verwirklicht sind, optimiert.

Ein weiterer Aspekt ist schließlich ein Verfahren zur Anregung des erfindungsgemäßen Piezomotors mit einer Ansteuerungselektronik, bei der die Regelung der Erregerfrequenz anhand der Stromüberhöhung und/oder des jeweiligen Phasenminimums und/oder der Phasenänderung als Funktion der Frequenz erfolgt.

Die Ansteuerungselektronik sucht hierbei die für den Piezomotor günstigste Erregerfrequenz anhand des oben beschriebenen und als Resonanz-Antiresonanz-Paar bekannten Effekts. In einer bevorzugten Ausgestaltung des erfindungsgemäßen Verfahrens werden die Erregerfrequenzen von der Ansteuerungselektronik in definierten Abständen von dem ermittelten Phasenminimum versetzt erzeugt.

Vorzugsweise werden bei Piezomotoren mit mehreren Bewegungsrichtungen die Erregerfrequenzen so eingestellt, dass die Phase zwischen den zu den Betriebsfrequenzen korrespondierenden Resonanz-Antiresonanz-Paaren jeweils um einen hinreichend großen Betrag abfällt.

Die Erfindung wird im Folgenden anhand der Figuren 1 - 6 näher erläutert. Die Figuren zeigen jedoch allein beispielhafte Ausgestaltungen der Erfindung und schränken den allgemeinen Erfindungsgedanken in keiner Weise ein.

**Figur 1** zeigt eine Seitenansicht eines erfindungsgemäßen Piezomotors, der ein Rad antreibt,

**Figur 2** zeigt einen Schnitt durch den Piezomotor und eine Draufsicht auf einen erfindungsgemäßen Piezomotor,

**Figur 3** zeigt die Darstellung der Schwingungen eines Resonators und eines in dem Resonator eingespannten piezoelektrischen Bauelements in Diagrammform,

**Figur 4** zeigt eine erste Darstellung des Verlaufs der Kraft des erfindungsgemäßen Piezomotors in Abhängigkeit von der Frequenz,

**Figur 5** zeigt eine Darstellung verschiedener Verläufe der Kraft eines erfindungsgemäßen Piezomotors bei verschiedenen Betriebsfrequenzen.

**Figur 6** zeigt eine Darstellung verschiedener Ausführungen des Resonators

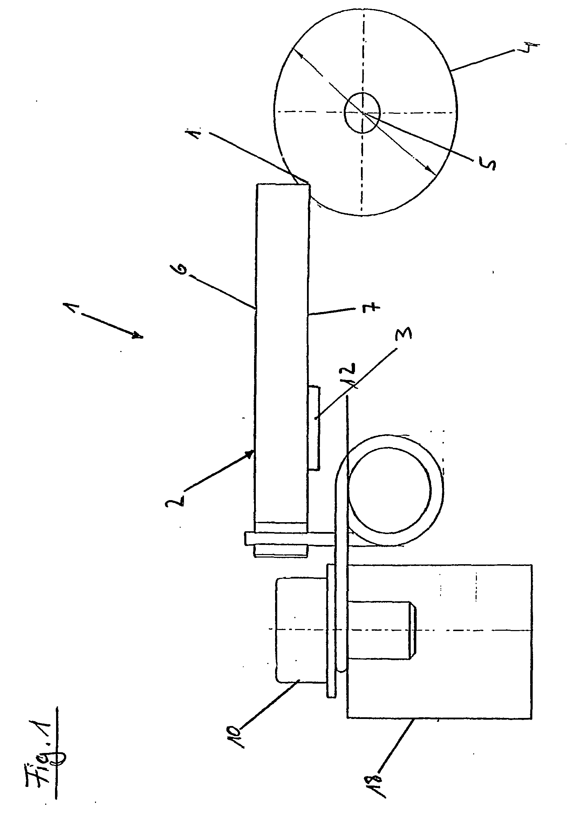

In **Figur 1** wird eine Seitenansicht eines erfindungsgemäßen Piezomotors 1 dargestellt, der an der Kontaktstelle 13 mit einem Rad 4 zusammenwirkt und das Rad 4 in zwei Richtungen um die Achse 5, welche senkrecht zur Papierebene steht, drehen kann. Der Piezomotor 1 besteht aus einem Resonator 2 mit zwei parallelen und gleichförmigen Hauptflächen 6, 7, in dem ein piezoelektrisches Bauelement (nicht gezeigt) angeordnet ist. Der Resonator 2 ist zudem über eine Feder 12 und eine Schraube 10 mit einem angedeuteten Rahmen 18 verbunden.

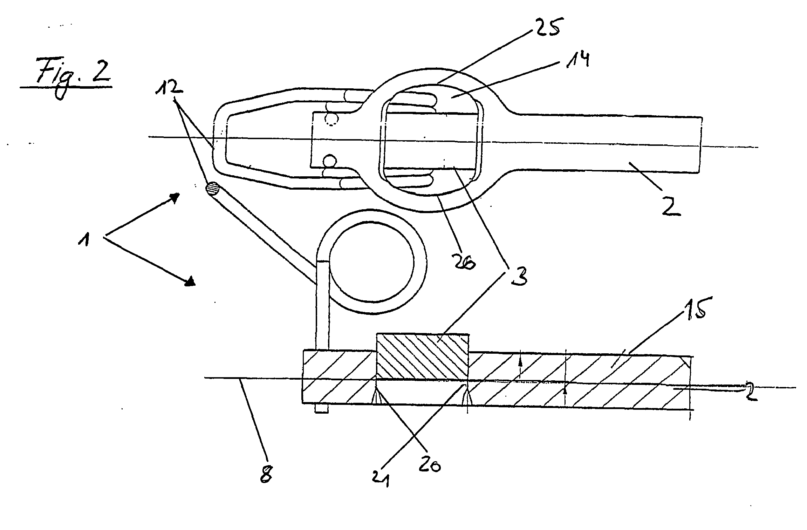

In **Figur 2** wird ein Schnitt durch und eine Draufsicht auf einen erfindungsgemäßen Piezomotor 1 gezeigt. Der Resonator 2 besitzt eine Symetrieebene 8. In dem Resonator 2 befindet sich eine Öffnung 14, die durch die Seitenwände 25, 26 begrenzt ist. Innerhalb der Öffnung 14 ist ein piezoelektrisches Bauelement 3 zwischen den Kontaktflächen 20, 21 so eingespannt. Des weiteren ist der Resonator mit einer Schenkelfeder 12 verbunden. Das piezoelekrische Bauelement und die Schenkelfeder sind so an dem Resonator angeordnet, dass dessen Symmetrie gezielt gestört worden ist, so daß die Symmetrieebene des Piezomotors (nicht dargestellt) nicht mit der Symmetrieebene 8 des Resonators zusammenfällt.

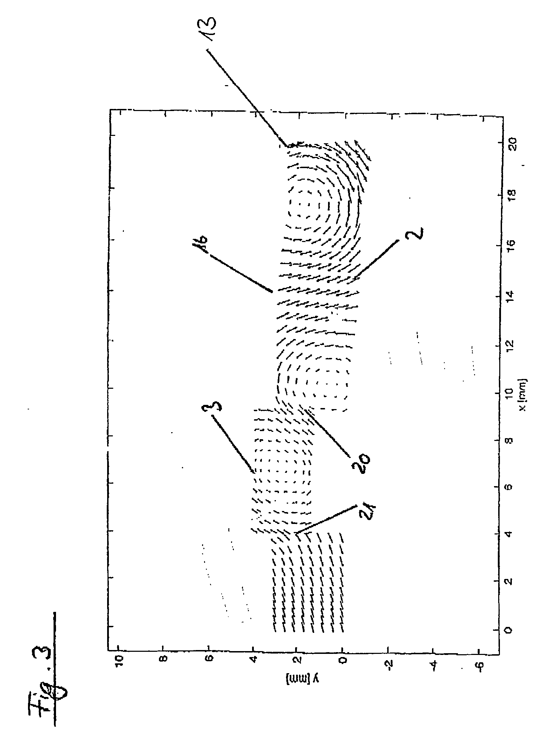

In **Figur 3** sind die Schwingungen der einzelnen Bereiche eines Resonators 2 und eines in dem Resonator 2 eingespannten piezoelektrischen Bauelementes 3 in vektorieller Form dargestellt. Die Vektoren besitzen in dieser Darstellung eine x- und eine y-Komponente. Die Orientierung der Schwingungen der einzelnen Flächenelemente ergibt sich aus der Ausrichtung der Vektoren; die Länge der Vektoren ist proportional zur Amplitude der Schwingungen. Die von dem innerhalb des Resonators 2 eingespannten piezoelektrischen Bauelement 3 ausgeführten Schwingungen werden über die Kontaktflächen 20, 21 auf den Resonator 2 übertragen. Das piezoelektrische Bauelement 3 ragt in dieser Ausführungsform aus der dem bewegbaren Element (nicht gezeigt) zugewandten zweiten Hauptfläche 16 des Resonators 2 heraus. Die Schwingung im Kontaktbereich 13 des Resonators 2 übt schließlich die für die Bewegung des bewegbaren Elements (nicht gezeigt) notwendige Kraft aus, dabei können sich die Punkte des Kontaktbereichs auf elliptischen Bahnen bewegen, die Vektoren geben dann die Ausrichtung der großen Achsen dieser Ellipsen an.

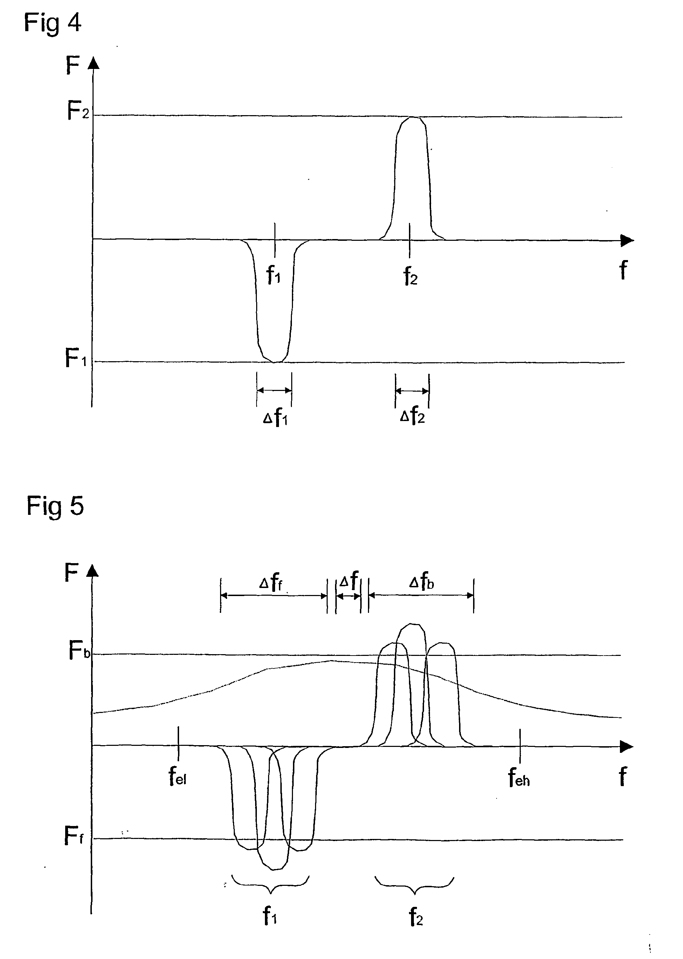

In **Figur 4** wird die diagrammartige Darstellung eines Verlaufs der von einem erfindungsgemäßen Piezomotor ausgeübten Kraft F in Abhängigkeit von der Erregerfrequenz f gezeigt. Bauelemente sind in dieser Figur nicht dargestellt. Der Piezomotor 1 ist dabei so gestaltet, dass er in einem Frequenzintervall $\Delta f_1$ und einem Maximum bei der Frequenz $f_1$ eine Bewegung des bewegbaren Elements mit der betragsmäßig maximalen Kraft $F_1$ erzeugt. Der Piezomotor erzeugt des weiteren bei einem Frequenzintervall $\Delta f_2$ eine Bewegung des bewegbaren Elements in die entgegengesetzte Richtung und übt bei der Frequenz $f_2$ die betragsmäßig maximale Kraft $F_2$ aus.

In **Figur 5** wird eine Darstellung verschiedener Verläufe der Kraft F eines erfindungsgemäßen Piezomotors bei verschiedenen Betriebsfrequenzen f gezeigt. In dieser Darstellung ist schematisch angedeutet, dass bei der Serienfertigung der erfindungsgemäßen Piezomotoren durch Fertigungsschwankungen ebenso Schwankungen in den Schubkräften F auftreten, die sowohl bei unterschiedlichen Frequenzen f als auch in unterschiedlichen Maxima F auftreten können. Allgemein gilt jedoch, dass die produzierten und als funktionstüchtig eingestuften Piezomotoren eine Betriebsfrequenz innerhalb des Frequenzintervalls $\Delta f_f$ besitzen. In diesem Frequenzbereich müssen die Piezomotoren bei mindestens einer in diesem Bereich liegenden Frequenz Schub in einer erste Richtung erzeugen, wobei dieser Schub im Betrag höher sein muss als $F_f$. Des weiteren müssen die Motoren innerhalb eines weiteren Frequenzintervalls $\Delta f_b$ eine weitere Betriebsfrequenz aufweisen, bei der Schub in eine zweite Richtung, die vorzugsweise der ersten Richtung entgegengesetzt ist, erzeugt wird. Dieser Schub muss zudem im Betrag größer oder gleich $F_b$ sein. Vorzugsweise erzeugt dabei keiner der in Serie gefertigten Piezomotoren im ersten Frequenzbereich einen Schub, der in die zweite Richtung verläuft. Analog dazu erzeugt kein Motor im zweiten Frequenzbereich Schub in die erste Richtung. Hierdurch ist es möglich, die Ansteuerungselektronik so auszülegen, dass sie ein breitbandiges Signal mit einem Frequenzintervall $\Delta f_f$ bzw. $\Delta f_b$ ausgibt und bei dem dennoch sicher gestellt ist, dass keiner der Motoren zu Schub in die entgegengesetzte Richtung angeregt wird. Diese Frequenzen können als Frequenzgemisch, als zeitlich getrennte Abfolge von Frequenzen oder als Mischung dieser beiden Techniken implementiert werden. Die erfindungsgemäßen Piezomotoren sind darüber hinaus derart gestaltet, dass die Frequenzintervalle $\Delta f_f$ und $\Delta f_b$ innerhalb des Wirkungsbereichs eines als Bandsperre wirkenden Schwingkreises liegen. Dieser Schwingkreis wird vorzugsweise mit einer einzigen Spule innerhalb der Ansteuerungselektronik und dem kapazitiv wirkenden Piezomotor gebildet. In der Figur 5 zeigt die strichpunktierte Linie 17 den frequenzabhängigen Verlauf des Wechselstromwiderstands eines Schwingkreises, der bei der Frequenz $f_e$ im Intervall von $f_{el}$ bis $f_{eh}$ als Bandsperre wirkt.

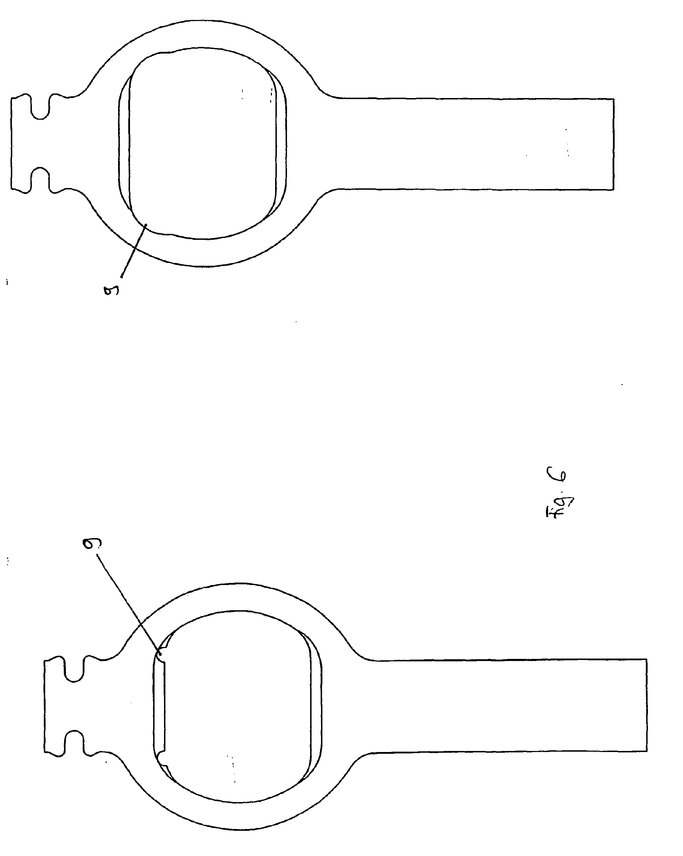

In Figur 6 sind Beispiele alternativer Formen des Resonators gezeigt. Insbesondere können Kerben (9) eingebracht werden, die Schwingungsverhalten und Fertigung des Motors positiv beeinflussen.

**Liste der Bezugszeichen:**

| | |
|---|---|
| 1 | Piezomotor |
| 2 | Resonator |
| 3 | piezoelektrisches Bauelement |
| 4 | bewegbares Element |
| 5 | Drehachse |
| 6 | erste Hauptfläche des Resonators |
| 7 | zweite Hauptfläche des Resonators |
| 8 | Mittellängsachse |
| 10 | Schraube |
| 12 | elastisches Element |
| 13 | Kontaktstelle des Resonators mit dem bewegbaren Element |
| 14 | Öffnung im Resonator |

18 Rahmen
20 erste Kontaktfläche
21 zweite Kontaktfläche
23 Federwindungen
25 erste Seitenwand der Öffnung
26 zweite Seitenwand der Öffnung

**Patentansprüche**

1. Plezomotor(1) mit mindestens einem Piezoelement (3), das mit einem Resonator (2) verbundenen ist und diesen in Schwingungen versetzt und gegebenenfalis einem elastischen Element (12) zum Andruck des Resonators an ein bewegbares Element (4), wobei der Resonator (2) eine Symmetrieebene (8) aufweist und der Resonator (2) bei mindestens zwei Betriebsfrequenzen ($f_1$, $f_2$) in Schwingungen versetzbar ist, wobei das Piezoelement (3) und/oder das elastische Element (12) so an dem Resonator (2) angeordnet sind, dass die Symmetrieebene (8) keine Symmetrieebene des Piezomotors darstellt , so dass mit dem Resonator (2) das bewegbare Element (4) bei der unteren der beiden Betriebsfrequenzen (f1, f2) in eine erste Richtung antreibbar ist und bei der oberen der beiden Betriebsfrequenzen (f1, f2) in eine zweite Richtung entgegengesetzt der ersten Richtung antreibbar ist,
**dadurch gekennzeichnet, dass**
das Piezoelement (3) aus einer zur gennanten Symmetrie ebene parallelen Hauptfläche (6, 7) des Resonators (2) herausragt, damit das Piezoelement (3) exzentrisch zu mindestens einer Symmetrieebene (8) des Resonators (2) angeordnet ist.

2. Piezomotor nach Anspruch 1, **dadurch gekennzeichnet, dass** die obere Betriebsfrequenz die untere um nicht mehr als das 1,5-fache übersteigt.

3. Piezomotor nach Anspruch 1, **dadurch gekennzeichnet, dass** beide Betriebsfrequenzen unterhalb der Hälfte des Frequenzwertes liegen, der sich aus der Wellenausbreitungsgeschwindigkeit für Longitudinalwellen des Resonatormaterials geteilt durch die grösste Resonatorabmessung ergibt.

4. Piezomotor (1) nach einem der voranstehenden Ansprüche, **dadurch gekennzeichnet, dass** der Resonator (2) zwei im wesentlichen parallel zueinander und zur Symmetrieebene stehende, gleichförmige sowie im wesentlichen gleich große Hauptflächen (6, 7) aufweist.

5. Piezomotor (1) nach einem der voranstehenden Ansprüche, **dadurch gekennzeichnet, dass** der Querschnitt des Resonators (2) zwischen den Hauptflächen konstant ist.

6. Piezomotor (1) nach einem der voranstehenden Ansprüche, **dadurch gekennzeichnet, dass** das piezoelektrische Element (3) zwei Terminals aufweist und mit vorzugsweise einem Signal anregbar ist.

7. Piezomotor (1) nach einem der vorhergehenden Ansprüche, **dadurch gekennzeichnet, dass** das bei Betrieb des Motors mit einem elektrischen Signal von Sinus- oder Rechteckform eine makroskopische Bewegungen des bewegbaren Elementes erzeugbar ist.

8. Piezomotor (1) nach einem der voranstehenden Ansprüche, **dadurch gekennzeichnet, dass** das bewegbare Element (4) zumindest teilweise aus einem verstärkten Kunststoff, vorzugsweise Glaskugel-, Mineralfaser-, Kohlefaser- und/oder Glasfaser-verstärktem Kunststoff, besteht.

9. Piezomotor (1) nach einem der voranstehenden Ansprüche, **dadurch gekennzeichnet, dass** der Resonator (2) Schwingungen, die nicht reine Longitudinal-Torsions- oder Biegemoden sind, ausführt.

10. Piezomotor (1) nach einem der voranstehenden Ansprüche, **dadurch gekennzeichnet, dass** der Resonator (2) eine Öffnung (14) zur Aufnahme des piezoelektrischen Bauelements (3) aufweist und die von dem Resonator (2) gebildeten Seitenwände (25, 26) dieser Öffnung zumindest über eine Teillänge unterschiedliche Querschnitte aufweisen.

11. Piezomotor (1) nach Anspruch 10, **dadurch gekennzeichnet, dass** in der Öffnung (14) Kerben (9) angeordnet sind.

12. Piezomotor (1) nach einem der Ansprüche 10 und 11, **dadurch gekennzeichnet, dass** wenigstens eine der Seitenwände in Längsrichtung des Resonators (2) ungerade, insbesondere gekrümmt oder wellenförmig, ist.

13. Piezomotor (1) nach einem der voranstehenden Ansprüche, **dadurch gekennzeichnet, dass** der Piezomotor (1) eine oder mehrere Zusatzmassen aufweist.

14. Piezomotor (1) nach einem der voranstehenden Ansprüche, **dadurch gekennzeichnet, dass** der Piezomotor (1) eine oder mehrere Versteifungen oder Schwächungen aufweist.

15. Piezomotor (1) nach einem der voranstehenden Ansprüche, **dadurch gekennzeichnet, dass** die Antriebsmoden des Piezomotors (1) bei den Betriebsfrequenzen ($f_1$, $f_2$) im Kontaktbereich mit dem bewegbaren Element (4) für unterschiedliche Bewegungsrichtungen des bewegbaren Elements (4) nicht zueinander parallel verlaufende Vibrationsgeschwindigkeitsprofile aufweisen.

**16.** Piezomotor (1) nach einem der voranstehenden Ansprüche, **dadurch gekennzeichnet, dass** das piezoelektrische Bauelement (3) eine schichtweise Anordnung von Elektroden und Keramik aufweist.

**17.** Piezomotor (1) nach Anspruch 16, **dadurch gekennzeichnet, dass** die Elektroden im wesentlichen aus Kupfer bestehen.

**18.** Piezomotor nach einem der Ansprüche 16 oder 17, **dadurch gekennzeichnet**, das die Keramik einstückig ausgeführt ist.

**19.** Piezomotor (1) nach einem der voranstehenden Ansprüche, **dadurch gekennzeichnet, dass** der Resonator (2) für beide Betriebsfrequenzen an der Kontaktstelle (13) Schwingungen mit Amplituden der gleichen Größenordnung ausführt.

**20.** Piezomotor (1) nach Anspruch 19, **dadurch gekennzeichnet, dass** die Schwingungen im Bereich der Kontaktstelle (13) Amplituden von 50 nm - 50 μm, vorzugsweise 500 nm - 20 μm, insbesondere 1 μm - 5 μm aufweisen.

**21.** Piezomotor (1) nach einem der voranstehenden Ansprüche, **dadurch gekennzeichnet, dass** die Betriebsfrequenzen jeweils innerhalb zweier Frequenzbänder ($\Delta f_1$, $\Delta f_2$), mit einem Mindestabstand ($\Delta f$) und innerhalb einer maximalen Bandbreite ($\Delta f_{max}$), liegen.

**22.** Piezomotor (1) nach Anspruch 21, **dadurch gekennzeichnet, dass** für den Mindestabstand ($\Delta f$) und eine Betriebsfrequenz ($f_1$) folgende Abhängigkeiten bestehen:

$$0{,}025 \cdot f_1 \leq \Delta f \leq 1 \cdot f_1$$

vorzugsweise

$$0{,}1 \cdot f_1 \leq \Delta f \leq 0{,}3 \cdot f_1$$

**23.** Piezomotor (1) nach einem der Ansprüche 21 und 22, **dadurch gekennzeichnet, dass** die Stromaufnahme des Piezomotors (1) innerhalb der Frequenzbänder ($\Delta f_1$, $\Delta f_2$) nur bei den jeweiligen Betriebsfrequenzen maximal ist.

**24.** Piezomotor (1) nach einem der voranstehenden Ansprüche, **dadurch gekennzeichnet, dass** der Resonator (2) im Bereich eines ganzzahligen Vielfachen, insbesondere bei niedrigzahligem Vielfachen der Frequenzen ($f_1$, $f_2$) keine Resonanzen oder aber Resonanzen mit nur geringer Ankopplung und/oder Amplitude aufweist.

**25.** Piezomotor (1) nach einem der voranstehenden Ansprüche, **dadurch gekennzeichnet, dass** das bewegbare Element (4) bei zwei verschiedenen Frequenzen, vorzugsweise zwei Resonanzfrequenzen ($f_1$, $f_2$), in zwei entgegengesetzte Richtungen angetrieben wird und dass die Phase von Strom (I) und Spannung (U) innerhalb der Resonanz-Antiresonanz-Paare ($f_1$, $f_1$') und ($f_2$, $f_2$') abfällt.

**26.** Piezomotor (1) nach Anspruch 25, **dadurch gekennzeichnet, dass** das Verhältnis des Abstandes von f1 zu f1' zum Abstand f2 zu f2' zwischen 0,25 und 4 liegt.

**27.** Piezomotor (1) nach Anspruch 25 oder 26, **dadurch gekennzeichnet, dass** die elektromechanische Kopplung des piezoelektrischen Bauelementes an die Betriebsmoden des Resonators gross ist, bzw. der Abstand von $f_1$ zu $f_1$' bzw. $f_2$ zu $f_2$' mindestens 500 Hz, vorzugsweise mehr als 2 kHz, insbesondere mehr als 5 kHz beträgt.

**28.** Piezomotor (1) nach einem der Ansprüche 25 - 27, **dadurch gekennzeichnet, dass** die Phase innerhalb der Resonanz-Antiresonanz-Paaren ($f_1$, $f_1$') und ($f_2$, $f_2$') um mindestens 30°, vorzugsweise um mehr als 45°, insbesondere um mehr als 60° abfällt und dass der Phasenabfall für beide Betriebsmoden in der gleichen Größenordnung liegt.

**29.** Piezomotor (1) nach einem der voranstehenden Ansprüche, **dadurch gekennzeichnet, dass** der elektromechanische Kopplungsfaktor (EMCF) der einzelnen Betriebsmoden des Piezomotors (1) mindestens 0,01, vorzugsweise mehr als 0,04, insbesondere mehr als 0,1 beträgt und dass der Kopplungsfaktor für beide Betriebsmoden in der gleichen Größenordnung liegt.

**30.** Piezomotor (1) nach einem der voranstehenden Ansprüche, **dadurch gekennzeichnet, dass** der Resonator (2) über ein elastisches Element (12), vorzugsweise eine Feder, an das bewegbare Element (4) gedrückt wird, wobei die Resonanzen des elastischen Elements (12), bei denen ein Großteil der kinetischen Energie des Piezomotors (1) von dem elastischen Element (12) aufgenommen wird, außerhalb der Betriebsfrequenzen liegt.

**31.** Piezomotor nach Anspruch 30, **dadurch gekennzeichnet**, das der Federquerschnitt zumindest teilweise nicht rund ist.

**32.** Piezomotor (1) nach Anspruch 30 oder 31, **dadurch gekennzeichnet, dass** die Feder (12) Windungen (23) aufweist, die nicht aneinander anliegen.

**33.** Piezomotor (1) nach einem der voranstehenden Ansprüche, **dadurch gekennzeichnet, dass** die mechanischen Impedanzen oder Admittanzen des Piezomotors (1), insbesondere die mechanischen Impedanz oder Admittanz an der Kontaktstelle des Resonators (2) mit dem bewegbaren Element (4) so groß ist, dass die vom Resonator (2) ausgeführten Schwingungen im wesentlichen unabhängig von der Größe, Ausrichtung und/oder Bewegung des bewegbaren Elements (4) sind.

**34.** Piezomotor nach Anspruch 33, **dadurch gekennzeichnet, dass** die Abhängigkeit < 10% ist.

**35.** Piezomotor (1) nach einem der voranstehenden Ansprüche, **dadurch gekennzeichnet, dass** der Resonator (2) über ein vorzugsweise mit einem Rahmen (18) verbundenes elastisches Element (12), vorzugsweise einer Feder gegen das bewegbare Element (4) gedrückt wird, wobei bei allen Betriebsfrequenzen der größte Anteil der bei Betrieb des Piezomotors (1) erzeugten Formänderungsenergie im Resonator (2) gespeichert ist.

**36.** Piezomotor (1) nach Anspruch 35, **dadurch gekennzeichnet, dass** der im Resonator (2) gespeicherte Energieanteil mindestens 60 %, vorzugsweise mindestens 90 % der bei Betrieb des Piezomotors (1) erzeugten mechanischen Energie beträgt.

## Claims

**1.** A Piezoelectric motor (1) comprising at least one piezo element (3) connected with a resonator (2) and moves this in vibrations and if applicable an elastic element (12) for pressing the resonator on a moveable element (4), whereas the resonator (2) has a plane of symmetry (8) and the resonator (2) can be stimulated to vibrate at least at two frequencies of operation ($f_1$, $f_2$), whereas the piezo element (3) and/or the elastic element (12) are arranged to the resonator (2) in such a way that the plane of symmetry (8) does not represent a plane of symmetry of the piezomotor so that with the resonator (2) the moveable element (4) is drivable at the lower of the both frequencies of operation ($f_1$, $f_2$) in a first direction and at the upper of the both frequencies of operation ($f_1$, $f_2$) is drivable to a second direction which is reverse to the first direction
**characterized in that**,
the piezo element (3) protrudes from a main area (6, 7) of the resonator (2) which is parallel to said plane of symmetry, thereby the piezo element (3) is arranged eccentrically to at least one plane of symmetry (8) of the resonator (2).

**2.** Piezomotor according to claim 1,
**characterized in that**
the upper frequency of operation does not exceed the lower more than 1,5 times.

**3.** Piezomotor according to claim 1,
**characterized in that**
both frequencies of operation are below the half of the frequency value which follows from the wave propagation speed for longitudinal waves of the resonator material divided by the largest resonator dimension.

**4.** Piezomotor (1) according to one of the preceding claims,
**characterized in that**
the resonator (2) has two homogeneous main areas (6, 7) of substantially same size which are standing substantially parallel to one another and to the plane of symmetry.

**5.** Piezomotor (1) according to one of the preceding claims,
**characterized in that**
the cross-section of the resonator (2) is constant between the main areas.

**6.** Piezomotor (1) according to one of the preceding claims,
**characterized in that**
the piezoelectric element (3) has two terminals and is preferably excitable with a signal.

**7.** Piezomotor (1) according to one of the preceding claims,
**characterized in that**
at operation of the motor with an electrical signal of sinus- or rectangle shape a macroscopic movement of the moveable element can be generated.

**8.** Piezomotor (1) according to one of the preceding claims,
**characterized in that**
the moveable element (4) consists at least partially of a reinforced synthetic material, preferably glas ball-, mineral fibre-, carbon fibre- and/or glass fiber reinforced synthetic material.

**9.** Piezomotor (1) according to one of the preceding claims,
**characterized in that**
the resonator (2) executes vibrations which are not pure longitudinal-, torsional-, or bending modes.

**10.** Piezomotor (1) according to one of the preceding claims,
**characterized in that**
the resonator (2) has an opening (14) for acceptance of the piezoelectric part (3) and side walls (25, 26) which are built from the resonator (2) of this opening have at least different cross-sections over a partial length.

**11.** Piezomotor (1) according to claim 10,
**characterized in that**
in the opening (14) are notches (9) arranged.

**12.** Piezomotor (1) according to one of the claims 10 and 11,
**characterized in that**
at least one of the side walls in the longitudinal direction of the resonator (2) is odd in particular curved or wavelike.

**13.** Piezomotor (1) according to one of the preceding claims,
**characterized in that**
the piezomotor (1) has one or more additional mass.

**14.** Piezomotor (1) according to one of the preceding claims,
**characterized in that**
the piezomotor (1) has one or more stiffenings or attenuations.

**15.** Piezomotor (1) according to one of the preceding claims,
**characterized in that**
the driving modes of the piezomotor (1) at the frequencies of operation ($f_1$, $f_2$) have vibration speed profiles for different movement directions of the moveable element (4) which are not running parallel to one another in the contact area with the moveable element (4).

**16.** Piezomotor (1) according to one of the preceding claims,
**characterized in that**
the piezoelectric part (3) has a layered configuration of electrodes and ceramics.

**17.** Piezomotor (1) according to claim 16,
**characterized in that**
the electrodes substantially consist of copper.

**18.** Piezomotor according to one of the claims 16 or 17,
**characterized in that**
the ceramics is executed in one piece.

**19.** Piezomotor (1) according to one of the preceding claims,
**characterized in that**
the resonator (2) executes for both frequencies of operation at the contact point (13) vibrations with amplitudes of the same order of magnitude.

**20.** Piezomotor (1) according to claim 19,
**characterized in that**
the vibrations have amplitudes of 50 nm - 50 μm, preferably 500 nm - 20 μm, in particular 1 μm - 5 μm in the area of the contact point (13).

**21.** Piezomotor (1) according to one of the preceding claims,
**characterized in that**
the frequencies of operation are respectively within two frequency bands (Δf1, Δf2) with a minimum distance (Δf) and within a maximal band with ($\Delta_{fmax}$).

**22.** Piezomotor (1) according to claim 21,
**characterized in that**
for the minimum distance (Δf) and a frequency of operation ($f_1$) exist following depencies:

$$0{,}025 \cdot f_1 \leq \Delta f \leq 1 \cdot f_1$$

preferably

$$0{,}1 \cdot f_1 \leq \Delta f \leq 0{,}3 \cdot f_1$$

**23.** Piezomotor (1) according to one of the claims 21 and 22,
**characterized in that**
the current consumption of the piezomotor (1) within the frequency bands (Δf1, Δf2) is only maximal at the respectively operation frequencies.

**24.** Piezomotor (1) according to one of the preceding claims,
**characterized in that**
the resonator (2) has in the area of an integer multiple, in particular at low-integer multiple of the frequencies ($f_1$, $f_2$) no resonances or but resonances with only low coupling and/or amplitude.

**25.** Piezomotor (1) according to one of the preceding claims,
**characterized in that**
the moveable element (4) is driven in two reverse directions at two different frequencies, preferably two resonance frequencies ($f_1$, $f_2$) and that the phase of current (I) and voltage (U) falls off within the resonance-antiresonance-pairs ($f_1$, $f_1$') and ($f_2$, $f_2$').

**26.** Piezomotor (1) according to claim 25,
**characterized in that**

the ratio of the distance of f1 to f1' to the distance f2 to f2' is between 0,25 and 4.

**27.** Piezomotor (1) according to claim 25 or 26, **characterized in that** the electromechanical coupling of the piezoelectric part at the operating modes of the resonator is large respectively the distance of $f_1$ to $f_1$' respectively $f_2$ to $f_2$' is at least 500 Hz, preferably more than 2 kHz, in particular more than 5 kHz.

**28.** Piezomotor (1) according to one of the claims 25 - 27, **characterized in that** the phase within the resonance-antiresonance-pairs ($f_1$, $f_1$') and ($f_2$, $f_2$') falls off by at least 30°, preferably by more than 45°, in particular by more than 60° and that the phase decrease is for both operation modes in the same order of magnitude.

**29.** Piezomotor (1) according to one of the preceding claims, **characterized in that** the electromechanical coupling factor (EMCF) of the single operation modes of the piezomotor (1) is at least 0,01, preferably more than 0,04, in particular more than 0,1 and that the coupling factor is in the same order of magnitude for both operation modes.

**30.** Piezomotor (1) according to one of the preceding claims, **characterized in that** the resonator (2) is pushed by an elastic element (12), preferably by a spring to the moveable element (4), wherein the resonances of the elastic element (12), at which a large part of the kinetic energy of the piezomotor (1) is adsorbed by the elastic element (12), are outside of the frequencies of operation.

**31.** Piezomotor (1) according to claim 30, **characterized in that** the spring cross-section is at least partially not round.

**32.** Piezomotor (1) according to claim 30 or 31 **characterized in that** the spring (12) has windings (23) which are not contacting one another.

**33.** Piezomotor (1) according to one of the preceding claims **characterized in that** the mechanical impedances or admittances of the piezomotor (1), in particular the mechanical impedance or admittance at the contact point of the resonator (2) with the moveable element (4) is as large that vibrations executed from the resonator (2) are substantially independent in the size, orientation and/or movement of the moveable element (4).

**34.** Piezomotor according to claim 33, **characterized in that** the dependent is ≤ 10%.

**35.** Piezomotor (1) according to one of the preceding claims, **characterized in that** the resonator (2) is pushed by an elastic element (12) which is preferably connected with a frame (18) and which is preferably a spring, against the moveable element (4), wherein at all frequencies of operation the largest part of strain energy, which is generated during operation of the piezomotor (1) is stored in the resonator (2).

**36.** Piezomotor (1) according to claim 35, **characterized in that** the part of energy, stored in the resonator (2) is at least 60 %, preferably at least 90 % of the mechanical energy, generated during operation of the piezomotor (1).

**Revendications**

**1.** Moteur piézoélectrique (1) comportant au moins un composant piézoélectrique (3) raccordé à un résonateur (2) dont il provoque l'oscillation, ainsi qu'éventuellement un élément élastique (12) pour contraindre le résonateur contre un élément (4) à entraîner, le résonateur (2) présentant un plan de symétrie (8) et le résonateur (2) pouvant être mis en oscillation sous au moins deux fréquences de service ($f_1$, $f_2$), le composant piézoélectrique (3) et/ou l'élément élastique (12) étant disposés sur le résonateur (2) de telle manière que le plan de symétrie (8) ne constitue pas un plan de symétrie du moteur piézoélectrique, l'élément mobile (4) pouvant ainsi être entraîné avec le résonateur (2) dans une première direction sous la fréquence inférieure des deux fréquences de service ($f_1$, $f_2$), et dans une deuxième direction opposée à la première direction sous la fréquence supérieure des deux fréquences de service ($f_1$, $f_2$), **caractérisé en ce que** le composant piézoélectrique (3) dépasse d'une surface principale (6, 7) du résonateur (2) parallèle au plan de symétrie susmentionné, pour que ledit composant piézoélectrique (3) soit disposé de manière excentrée par rapport à au moins un plan de symétrie (8) du résonateur (2).

**2.** Moteur piézoélectrique selon la revendication 1, **caractérisé en ce que** la fréquence de service supérieure ne dépasse pas la fréquence de service inférieure de plus de 1,5 fois.

**3.** Moteur piézoélectrique selon la revendication 1, **ca-**

**ractérisé en ce que** les fréquences de service sont inférieures à la moitié de la valeur de fréquence qui résulte de la vitesse de propagation d'onde pour des ondes longitudinales du matériau du résonateur, divisée par la dimension maximale du résonateur.

**4.** Moteur piézoélectrique (1) selon l'une des revendications précédentes, **caractérisé en ce que** le résonateur (2) comporte deux surfaces principales (6, 7) sensiblement parallèles entre elles et au plan de symétrie, de même forme et de grandeurs sensiblement égales.

**5.** Moteur piézoélectrique (1) selon l'une des revendications précédentes, **caractérisé en ce que** la section transversale du résonateur (2) est constante entre les surfaces principales.

**6.** Moteur piézoélectrique (1) selon l'une des revendications précédentes, **caractérisé en ce que** le composant piézoélectrique (3) comporte deux terminaux, et **en ce qu'**il est excitable de préférence avec un signal.

**7.** Moteur piézoélectrique (1) selon l'une des revendications précédentes, **caractérisé en ce qu'**en cas de fonctionnement du moteur avec un signal électrique de forme sinusoïdale ou rectangulaire, un déplacement macroscopique de l'élément mobile peut être généré.

**8.** Moteur piézoélectrique (1) selon l'une des revendications précédentes, **caractérisé en ce que** l'élément mobile (4) est composé au moins partiellement d'une matière plastique renforcée, préférentiellement d'une matière plastique renforcée par des billes de verre, fibres minérales, fibres de carbone et/ou des fibres de verre.

**9.** Moteur piézoélectrique (1) selon l'une des revendications précédentes, **caractérisé en ce que** le résonateur (2) exécute des oscillations qui ne sont pas des modes de torsion ou de flexion longitudinale purs.

**10.** Moteur piézoélectrique (1) selon l'une des revendications précédentes, **caractérisé en ce que** le résonateur (2) comporte une ouverture (14) de réception du composant piézoélectrique (3) et **en ce que** les parois latérales (25, 26) de ladite ouverture formées par le résonateur (2) présentent des sections transversales différentes au moins sur une longueur partielle.

**11.** Moteur piézoélectrique (1) selon la revendication 10, **caractérisé en ce que** des encoches (9) sont formées dans l'ouverture (14).

**12.** Moteur piézoélectrique (1) selon la revendication 10 ou la revendication 11, **caractérisé en ce qu'**au moins une des parois latérales n'est pas droite dans le sens de la longueur du résonateur (2), et est notamment incurvée ou ondulée.

**13.** Moteur piézoélectrique (1) selon l'une des revendications précédentes, **caractérisé en ce que** ledit moteur piézoélectrique (1) comporte une ou plusieurs masses complémentaires.

**14.** Moteur piézoélectrique (1) selon l'une des revendications précédentes, **caractérisé en ce que** ledit moteur piézoélectrique (1) comporte un ou plusieurs renforcements ou rétrécissements.

**15.** Moteur piézoélectrique (1) selon l'une des revendications précédentes, **caractérisé en ce que** les modes d'entraînement du moteur piézoélectrique (1) présentent des profils de vitesse de vibration non parallèles entre eux pour différentes directions de déplacement de l'élément mobile (4) sous les fréquences de service ($f_1$, $f_2$) dans la zone de contact avec l'élément mobile (4).

**16.** Moteur piézoélectrique (1) selon l'une des revendications précédentes, **caractérisé en ce que** le composant piézoélectrique (3) présente un agencement stratifié d'électrodes et de céramique.

**17.** Moteur piézoélectrique (1) selon la revendication 16, **caractérisé en ce que** les électrodes sont essentiellement en cuivre.

**18.** Moteur piézoélectrique selon la revendication 16 ou la revendication 17, **caractérisé en ce que** la céramique est réalisée en une seule pièce.

**19.** Moteur piézoélectrique (1) selon l'une des revendications précédentes, **caractérisé en ce que** le résonateur (2) réalise des oscillations avec des amplitudes d'un même ordre de grandeur pour les deux fréquences de service sur le point de contact (13).

**20.** Moteur piézoélectrique (1) selon la revendication 19, **caractérisé en ce que** les oscillations présentent des amplitudes comprises entre 50 nm et 50 $\mu$m, préférentiellement entre 500 nm et 20 $\mu$m, et tout particulièrement entre 1 $\mu$m et 5 $\mu$m dans la zone du point de contact (13) .

**21.** Moteur piézoélectrique (1) selon l'une des revendications précédentes, **caractérisé en ce que** les fréquences de service sont respectivement comprises à l'intérieur de deux bandes de fréquences ($\Delta f_1$, $\Delta f_2$), avec un intervalle minimal ($\Delta f$) et à l'intérieur d'une bande de fréquence maximale ($\Delta f_{max}$).

**22.** Moteur piézoélectrique (1) selon la revendication 21, **caractérisé en ce que** les inégalités suivantes sont présentées pour l'intervalle minimal ($\Delta f$) et une fréquence de service ($f_1$) :

$$0{,}025 * f_1 \leq \Delta f \leq 1 * f_1 ,$$

préférentiellement

$$0{,}1 * f_1 \leq \Delta f \leq 0{,}3 * f_1 .$$

**23.** Moteur piézoélectrique (1) selon la revendication 21 ou la revendication 22, **caractérisé en ce que** la puissance absorbée par ledit moteur piézoélectrique (1) à l'intérieur des bandes de fréquences ($\Delta f_1$, $\Delta f_2$) n'est maximale que sous les fréquences de service respectives.

**24.** Moteur piézoélectrique (1) selon l'une des revendications précédentes, **caractérisé en ce que** le résonateur (2) ne présente aucune résonance, ou alors des résonances à faible couplage et/ou amplitude seulement, dans la plage d'un multiple entier, en particulier pour des petits multiples des fréquences ($f_1$, $f_2$).

**25.** Moteur piézoélectrique (1) selon l'une des revendications précédentes, **caractérisé en ce que** l'élément mobile (4) est entraîné dans deux directions opposées sous deux fréquences différentes, préférentiellement deux fréquences de résonance ($f_1$, $f_2$), et **en ce que** la phase de courant (i) et de tension (U) chute à l'intérieur des paires résonance-antirésonance ($f_1$, $f_1$') et ($f_2$, $f_2$').

**26.** Moteur piézoélectrique (1) selon la revendication 25, **caractérisé en ce que** le rapport entre l'intervalle entre $f_1$ et $f_1$' et l'intervalle entre $f_2$ et $f_2$' est compris entre 0,25 et 4.

**27.** Moteur piézoélectrique (1) selon la revendication 25 ou la revendication 26, **caractérisé en ce que** le couplage électromécanique du composant piézoélectrique aux modes de service du résonateur est élevé, ou **en ce que** l'intervalle entre $f_1$ et $f_1$' ou entre $f_2$ et $f_2$' est d'au moins 500 Hz, préférentiellement supérieur à 2 kHz, et tout particulièrement supérieur à 5 kHz.

**28.** Moteur piézoélectrique (1) selon l'une des revendications 25 à 27, **caractérisé en ce que** la phase à l'intérieur des paires résonance-antirésonance ($f_1$, $f_1$') et ($f_2$, $f_2$') chute d'au moins 30°, préférentiellement de plus de 45°, et tout particulièrement de plus de 60°, et **en ce que** la chute de phase est du même ordre de grandeur pour les deux modes de service.

**29.** Moteur piézoélectrique (1) selon l'une des revendications précédentes, **caractérisé en ce que** le facteur de couplage électromécanique (EMCF) des différents modes de service dudit moteur piézoélectrique (1) est d'au moins 0,01, préférentiellement supérieur à 0,04, et tout particulièrement supérieur à 0,1, et **en ce que** le facteur de couplage est du même ordre de grandeur pour les deux modes de service.

**30.** Moteur piézoélectrique (1) selon l'une des revendications précédentes, **caractérisé en ce que** le résonateur (2) est contraint contre l'élément mobile (4) par un élément élastique (12), de préférence un ressort, les résonances de l'élément élastique (12) où une grande partie de l'énergie cinétique du moteur piézoélectrique (1) est absorbée par l'élément élastique (12), étant extérieures aux fréquences de service.

**31.** Moteur piézoélectrique selon la revendication 30, **caractérisé en ce que** la section transversale du ressort n'est pas ronde, au moins partiellement.

**32.** Moteur piézoélectrique (1) selon la revendication 30 ou la revendication 31, **caractérisé en ce que** le ressort (12) comporte des enroulements (23) qui ne sont pas adjacents l'un à l'autre.

**33.** Moteur piézoélectrique (1) selon l'une des revendications précédentes, **caractérisé en ce que** les impédances ou les admittances mécaniques dudit moteur piézoélectrique (1), en particulier l'impédance ou l'admittance mécanique sur le point de contact du résonateur (2) avec l'élément mobile (4), sont si élevées que les oscillations (2) réalisées par le résonateur sont sensiblement indépendantes de la grandeur, de l'orientation et/ou du mouvement de l'élément mobile (4).

**34.** Moteur piézoélectrique selon la revendication 33, **caractérisé en ce que** la relation est < 10%.

**35.** Moteur piézoélectrique (1) selon l'une des revendications précédentes, **caractérisé en ce que** le résonateur (2) est contraint contre l'élément mobile (4) par un élément élastique (12) préférentiellement raccordé à un cadre (18), de préférence un ressort, la plus grande partie de l'énergie élastique générée lors du fonctionnement du moteur piézoélectrique (1) étant accumulée dans le résonateur (2) sous toutes les fréquences de service.

**36.** Moteur piézoélectrique (1) selon la revendication 35, **caractérisé en ce que** la part d'énergie accumulée dans le résonateur (2) est d'au moins 60 %, préférentiellement d'au moins 90 % de l'énergie mécanique générée lors du fonctionnement du moteur piézoélectrique (1).

Fig. 1
1
2
3
4
5
6
7
10
12
18

2
15
2
25
14
3
3
26
20
21
8
12
1

Fig. 2

Fig. 3
13
16
2
3
20
21
x [mm]
y [mm]

Fig 4

F
F2
F1
f1
f2
f
Δf1
Δf2

Fig 5

F
Δff
Δf
Δfb
Fb
Ff
fel
feh
f
f1
f2

9

9

Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10062672 A1
- DE 10141820
- WO 0141228 A1
- EP 0103245 W
- DE 10146704